# EUROPEAN PATENT APPLICATION

(11) **EP 1 946 858 A2**
(43) Date of publication of application: **23.07.2008**
(21) Application number: 06819980.1
(22) Date of filing: 08.09.2006
(51) Int. Cl.: B09B 3/00

(54) **METHOD OF PRODUCING GLASS ARTICLES**

(30) Priority: 12.09.2005 WO PCT/ES2005/002206
(71) Applicant: MARTINEZ MANENT, Salvador, 08338 Premia de Dalt Barcelona (ES)
(72) Inventor: GARCIA VALLES, Maite, E-08025 BARCELONA (ES); NOGUES CARULLA, Joaquim, M., E-08023 BARCELONA (ES); AVILA MARTORELL, Gloria, 43764 CATLLAR (ES); TERRADAS I CODINA, Raimon, 08390 Montgat (ES); MARTINEZ MANENT, Salvador, 08338 Premia de Dalt- Barcelona (ES)
(74) Representative: Barroso Sánchez-Lafuente, Ignacio M.
(86) International application number: PCT/ES2006/000509
(87) International publication number: WO 2007/031588

(57) **Abstract**

The invention relates to a method of producing glass articles. The inventive method consists in melting oxides and other raw materials in a glass melting furnace in order to produce molten glass and conveying the molten glass from the melting furnace to moulds in which the articles are formed as the glass solidifies. The invention is **characterised in that** it comprises the following steps consisting in: supplying the glass melting furnace with sludge from wastewater treatment plants, comprising determined concentration of oxides; and adding suitable amounts of corresponding compounds to the melting furnace in order to obtain a determined total end composition of the aforementioned oxides, such that the oxide composition of the resulting article corresponds to that of a rock having a low melting temperature and low viscosity within the working temperature range of glass.

## Description

### Technical field of the invention

The invention relates to a method of producing glass articles, which comprises the melting of oxides and other raw materials in a glass melting furnace in order to produce molten glass and conveying the molten glass from the melting furnace to moulds wherein the articles are formed as the glass solidifies.

### Background of the invention

The disposal and recycling of sludge from wastewater treatment plants, whether industrial or municipal, is becoming a serious problem.

A primary disposal method is dumping them in controlled landfills or, alternatively, when the sludge composition so recommends, the incineration thereof. In any event, these alternatives are not very profitable from the environmental standpoint and they are not risk-free. Moreover, the cost of transport, dumping and treatment make these disposal methods difficult to bear.

The recovery of sludge as a raw material for agricultural uses, as an element in the production of fertilisers or as compost, is an alternative that is usually valued and applied, insofar as the sludge composition so allows and the necessary, sufficient spaces and agricultural farms are available, although this also creates significant logistical.

Moreover, in the case of certain heavy metal-rich sludge from inorganic industrial waste, or of galvanic sludge, this type of utilisation may be unadvisable, since the lixiviation and incorporation of heavy metals such as Pb, Ba, Cr, Cd, etc. into the soil and vegetables may be highly toxic and dangerous.

Consequently, it is important in such cases to have inerting methods available for this type of waste, combined with incineration processes.

Patent FR 2.719.793 discloses a method for the vitrification of solid waste that comes from the incineration of urban and/or industrial waste, which consists of heating the waste to its melting temperature, such that the vapourised salts produced are incorporated into the gases produced by the fusion and condensed in a tempering machine, being separated from the gas phase in an electrostatic filter, returned to the fusion mixture to form a liquid with sufficient viscosity to retain the drops of molten salt within the molten material leaving the furnace. The mixture is then quickly cooled to obtain a solid matrix wherein the salts are trapped.

An additive is incorporated into the mixture, selected from slag, pozzolana and basalt. The latter is a favourable rock.

One limitation of patent FR 2.719.793 lies in the fact that it is geared towards the inerting of waste contained in waste containers and requires the incorporation of certain components, such as basalt, to obtain certain determined characteristics, in this case, a matrix capable of admitting heavy metals, such as basalt. In sum, it requires a large amount of basalt for the inerting of the heavy metals.

### Explanation of the invention

The purpose of this invention is to provide a method of producing glass articles, whether flat or hollow, with the double objective of inerting the heavy metals contained in waste treatment sludge, on the one hand, by simultaneously simplifying the currently known procedures for inerting said waste by means of vitrification. To this end, the object of the invention is a new method of producing glass articles, which is essentially characterised in that it comprises the following steps:
feeding the glass melting furnace with sludge from wastewater treatment plants as the main component, and at least 30%, with certain delimited, well-known proportions of oxides;
adding the suitable quantities of the corresponding compounds to the melting furnace, in order to adjust them to a determined total end composition of said oxides, such that the oxide composition of the resulting article produced corresponds to that of a rock with a low melting temperature and a low viscosity within the working temperature range of glass.

According to another characteristic of this invention, the proportion of sludge from wastewater treatment plants that is fed to the melting furnace is greater than 30% by weight of raw materials, i.e. this wastewater treatment plant (WWTP) waste is the major component.

In accordance with another characteristic of this invention, the sludge comprises sludge that comes from heavy metal-rich inorganic industrial waste.

For example, it has been considered that the melting furnace may be fed with galvanic sludge; waste from the recovery of batteries; foundry sands; metal salts, such as calcium carbonate; and/or other waste the composition whereof is useful to obtain the desired composition.

According to the invention, the method comprises the step of cooling, in a controlled manner, the article shaped, according to an annealing procedure, to obtain a glass product.

Alternatively, the article shaped may first be cooled in a controlled manner, subsequently reheated to the nucleation temperature and then to the growth temperature, to obtain a vitroceramic product.

Preferably, although not exclusively, said rock whereto the composition in the melting furnace is attempting to approximate, is basalt.

This invention, contrary to patent FR 2.719.793, modifies the proportions of the components in order to adjust them to a determined composition, specifically that of basalt, though without having to add this rock.

Thus, according to the invention, basalt itself is not required in order to obtain the advantageous characteristics thereof. The same is applicable to rocks similar to basalt.

### Detailed description of a preferred embodiment

The method of this invention is a method of producing glass or vitroceramic articles, which makes it possible to inert the solid waste sludge from industrial treatment plants, as well as other types of waste containing metals and other materials, which are suitable for the production of oxides in a glass matrix.

The method is a modification of the conventional method which comprises, in a manner that is already known in relation to silica-sodium-calcium glass, the melting of oxides and other raw materials in a glass melting furnace, in order to produce molten glass, and conveying the molten glass from the melting furnace, through, for example, the so-called 'feeders', to moulds wherein the articles are formed as the glass solidifies, in devices that may be conventional automatic or semi-automatic machines for producing glass products.

The novelty of the method consists of the fact that the melting furnace is fed with sludge from wastewater treatment plants, with certain proportions of oxides, and that the suitable quantities of the corresponding compounds are added in the melting furnace in order to adjust them to a determined total end composition of said oxides, such that the oxide composition of the resulting article corresponds to that of a rock having a low melting temperature and low viscosity within the working temperature range of glass.

In accordance with the invention, a glass formulation is thus obtained from sludge from wastewater treatment plants (WWTP), by modifying their composition so that it matches the composition of rocks, generally basic rocks, such as basalts, with relatively low melting points -for example, 1,400°C- and the molten glass has adequate viscosities for the shaping thereof, for example, in a moulding machine.

The sludge may be sludge from heavy-metal-rich inorganic industrial waste or sludge from the galvanic industry.

Another possibility is to feed waste from the recovery of batteries as an additive for the sludge.

The method makes it possible to obtain both glass and vitroceramic products, merely by applying the adequate thermal treatment upon removal thereof from the shaping machine.

Thus, on the one hand, in order to obtain a glass product, the article shaped is cooled in a controlled manner, following an annealing procedure, in a so-called "annealing lehr".

Alternatively, the article shaped may first be cooled in a controlled manner, subsequently reheated to the nucleation temperature and then to the growth temperature, to obtain a vitroceramic product.

The additives used to bring the composition of the WWTP sludge to the desired composition may be both industrial waste in general, such as foundry sand, and raw materials, such as sodium carbonate.

An example of the original glass composition might be:

**Composition A**

| **Oxides** | Na₂O | MgO | Al₂O₃ | SiO₂ | P₂O₅ |
|---|---|---|---|---|---|
| % | 1.53 | 3.36 | 13.71 | 31.6 | 7.74 |
| SO₃ | K₂O | CaO | TiO₂ | Fe₂O₃ | Others |
| 2.86 | 1.80 | 30.27 | 2.00 | 4.32 | 0.81 |

To this original glass formulation, or Composition A, one may add, among other industrial waste, for example, galvanic sludge with a high content of heavy metals, the glass in Composition A acting as a vitrification matrix for the waste.

The proportion of waste that could be added to the glass in Composition A will be the maximum allowed by the viscosity thereof, in order to obtain a homogeneous liquid capable of being shaped in a mould machine.

An example of the composition of a galvanic sludge may be:

Composition of a calcinated galvanic sludge (% oxides):

| CaO | TiO₂ | V₂O₅ | MgO | PbO | BaO | NiO |
|---|---|---|---|---|---|---|
| 42.18 | 0.08 | 0.05 | 3.41 | 0.13 | 0.05 | 9.36 |
| Fe₂O₃ | Cr₂O₃ | ZnO | CuO | CdO | Na₂O | MnO₂ |
| 1.26 | 32.25 | 0.27 | 9.02 | 0.01 | 1.78 | 0.13 |

The temperatures of the different processes are:
a. In the case of the example, and in order to obtain glass (i.e. with annealing):

| | |
|---|---|
| Melting temperature: | 1,400°C |
| Annealing temperature: | 685°C |

b. In the case of the example, and in order to obtain vitroceramic material:

| | |
|---|---|
| Nucleation temperature: | 700°C |
| Growth temperature: | 913°C |

As those skilled in the art may observe, according to this invention, and contrary to the previous state of the art, WWTP sludge is used as the main component in the glass formulation. Other industrial waste or low-cost raw materials are also used to be mixed with the WWTP sludge, with the aim of obtaining a chemical composition equivalent to that of a rock with a low melting temperature and a low viscosity at the working temperatures of glass.

Thus, for example, according to patent FR 2.719.793, basalts are directly added in order to melt the waste, whereas, on the contrary, according to this invention, the composition of basalt is obtained by mixing the WWTP sludge with other waste, without adding basalt roc itself.

Moreover, with the composition obtained according to this invention, other special waste may be added, which is not possible in the previous state of the art of patent FR 2.719.793, since system of the latter does not allow for subsequent modification of the viscosity to the point suitable to be able to work the glass.

Thus, in summary, the method of this invention makes it possible to obtain a flux formulation with WWTP waste and other types of waste, with a composition margin and specific properties and, therefore, with specific characteristics: low melting temperature (200°C - 1,500°C); viscosity/temperature curve that allows for the shaping of the glass or vitroceramic material obtained in conventional machines.

Moreover, this invention makes it possible to add a given percentage (10%, 20%, 30%, etc., depending on the waste to be added) of other industrial waste (galvanic sludge, waste from the recovery of batteries, etc.) within the glass matrix, thus increasing the percentage of inert special waste. This is not possible with the conventional methods.

Finally, this invention, contrary to FR 2.719.793, makes it possible to obtain a composition with a good viscosity/temperature curve, with the aim of being able to correctly process the material and obtain a commercial glass product, for example, hollow containers, such as bottles, or technical glass or vitroceramics for construction, with an important added value, since it solves a significant environmental problem.

Having sufficiently described the nature of this invention, as well as the method to carry it out, we specify that all that does not alter, change or modify the main principle thereof is subject to detail variations.

## Claims

1. Method of producing glass articles, which comprises the melting of oxides and other raw materials in a melting furnace, in order to produce molten glass, and conveying the molten glass from the melting furnace to moulds wherein the articles are formed as the glass solidifies, **characterised in that** it comprises the following steps:
supplying the glass melting furnace with sludge from wastewater treatment plants containing determined proportions of oxides;
adding the suitable quantities of the corresponding compounds to the melting furnace, in order to adjust them to a determined total end composition of said oxides, such that the oxide composition of the resulting article corresponds to that of a rock having a low melting temperature and low viscosity within the working temperature range of glass.

2. Method of producing glass articles, according to claim 1, **characterised in that** the proportion of sludge from wastewater treatment plants which is fed to the melting furnace is greater than 30% by weight of raw materials.

3. Method of producing glass articles, according to either claim 1 or 2, **characterised in that** the sludge includes sludge from heavy metal-rich inorganic industrial waste.

4. Method of producing glass articles, according to claim 3, **characterised in that** it comprises feeding galvanic sludge.

5. Method of producing glass articles, according to claim 3, **characterised in that** it comprises feeding waste from the recovery of batteries.

6. Method of producing glass articles, according to claim 1, **characterised in that** foundry sand or other waste is added with those compositions that are useful to achieve the desired composition.

7. Method of producing glass articles, according to claim 1, **characterised in that** metal salts or other raw materials are added with those compositions that are useful to achieve the desired composition, for example, calcium carbonate.

8. Method of producing glass articles, according to any of the preceding claims, **characterised in that** it comprises cooling, in a controlled manner, the article shaped, following an annealing procedure, in order to obtain a glass product.

9. Method of producing glass articles, according to any of claims 1 to 8, **characterised in that** it comprises first cooling, in a controlled manner, the article shaped, subsequently heating it to the nucleation temperature, and then to the growth temperature, in order to obtain a vitroceramic product.

10. Method of producing glass articles, according to any of the preceding claims, **characterised in that** said rock is basalt.
